# EUROPÄISCHE PATENTANMELDUNG

(11) **EP 4 509 669 A1**
(43) Veröffentlichungstag der Anmeldung: **19.02.2025**
(21) Anmeldenummer: 23191445.8
(22) Anmeldetag: 15.08.2023
(51) Int. Cl.: E04B 1/10, F16B 5/02, F16B 37/08, E04B 1/61

(54) **WANDSYSTEM UMFASSEND EINE FERTIGBAUWAND UND VERFAHREN ZUM ERSTELLEN EINES WANDSYSTEMS**

(71) Anmelder: Hübscher Holzbau AG, 8222 Beringen (CH)
(72) Erfinder: Hübscher, Michael, 8465 Wildensbuch (CH)
(74) Vertreter: Graf, Werner

(57) **Zusammenfassung**

Das Wandsystem (1) umfasst zumindest eine Fertigbauwand (10) sowie mehrere Befestigungsvorrichtungen (2), wobei die Fertigbauwand (10) mittels mehreren Befestigungsvorrichtungen (2) mit einem Einbauort (20) verbunden ist, und die Fertigbauwand (10) für jede der Befestigungsvorrichtungen (2) mit einer Ausnehmung (10a) versehen ist, wobei jede der Befestigungsvorrichtungen (2) ein Montageelement (3), ein Befestigungselement (4) und ein Arretierelement (5) umfasst, wobei das Montageelement (3) eine Längsachse (L) aufweist und in Verlaufsrichtung der Längsachse (L) einen ersten Teilabschnitt (L1) und anschliessend einen zweiten Teilabschnitt (L2) aufweist, wobei das Montageelement (3) entlang des ersten Teilabschnittes (L1) eine konzentrisch zur Längsachse (L) verlaufende, als Sackloch ausgestaltete Innenbohrung (3d) mit einem Innengewinde (3e) aufweist, und wobei das Montageelement (3) im Bereich des zweiten Teilabschnittes (L2) eine senkrecht zur Längsachse (L) verlaufende Querbohrung (3g) aufweist, wobei das Befestigungselement (4) ein Aussengewinde (4a) umfasst, welches in die Innenbohrung (3e) eingeschraubt ist, wobei das Montageelement (3) in der zugehörigen Ausnehmung (10a) angeordnet ist, und wobei das Arretierelement (5) durch die Querbohrung (3g) des Montageelementes (3) und zumindest teilweise durch die Fertigbauwand (10) verläuft.

## Beschreibung

Die vorliegende Erfindung betrifft ein Wandsystem umfassend eine Fertigbauwand. Die vorliegende Erfindung betrifft weiter ein Verfahren zum Erstellen eines Wandsystems.

Wandsysteme umfassend Fertigbauwände finden zunehmend Anwendung beim Bau von Häusern und Holzstrukturen. Solche Bauten von Häusern und Fertigbauwänden werden als Holzrahmenbau bezeichnet, oder auch als Holzständerbau bzw. als Holztafelbau. Ein Vorteil des Holzrahmenbaus ist die schnelle Bauzeit. Holzrahmen, nachfolgend auch als Fertigbauwände bezeichnet, können in einem Werk vorgefertigt werden und danach auf der Baustelle sehr schnell zusammengesetzt werden, was die Bauzeit von Häusern erheblich verkürzen kann. Die Holzrahmenbauweise ist zudem leicht und flexibel, was eine Vielzahl von Gestaltungsmöglichkeiten und Designs erlaubt, sodass auch ein Bau von individuell gestalteten Häusern relativ einfach möglich ist. Da ein mittels Holzrahmenbau gefertigtes Haus zudem nachhaltig, energieeffizient und kosteneffizient ist, steigt der Bedarf nach derart gebauten Holzhäusern.

Beim Bau von Holzhäusern wird üblicherweise vorerst eine Bodenplatte, zum Beispiel in Form eines Betonfundaments erstellt, auf dem die vorgefertigten Holzrahmenbauelemente, üblicherweise in Form von Holzrahmenwände bzw. Fertigbauwänden, verankert werdend. Eine solche Bodenplatte weisen oft deutliche Höhenabweichungen und Unebenheiten auf. Auf einer Baustelle ist daher die Tätigkeit des sogenannten Nivellierens von zentraler Bedeutung. Im Kontext des Holzbaus können unter Nivellieren insbesondere die folgenden zwei Aspekte verstanden werden:
A: Festlegung der absoluten Höhe einer Fertigbauwand bzw. einer Mehrzahl von Fertigbauwänden .;
B: Horizontal Ausrichtung der zumindest einen Fertigbauwand durch Höhenausgleich zwischen der Fertigbauwand und der Bodenplatte.

Üblicherweise wird dieses anspruchsvolle und zeitaufwändige Nivellieren derart gelöst, dass ein horizontal verlaufender Balken, auch als Montageschwelle bezeichnet, nivelliert auf die Bodenplatte aufgebracht und danach mit der Bodenplatte befestigt wird, wobei zum Nivellieren beispielsweise Unterlegklötzchen verwendet werden, die mit Hilfe einer Wasserwaage derart positioniert werden, dass die Montageschwelle horizontal verläuft. In einem nachfolgenden Arbeitsgang wird dann die Fertigbauwand auf die Montageschwelle abgesetzt und an der Montageschwelle und/oder an der Bodenplatte befestigt.

Solche bekannte Verbindungselemente und Verbindungssysteme zur Befestigung von Holzstrukturen wie Fertigbauwände bzw. Holzrahmenbauelementen weisen somit den Nachteil auf, dass zeitaufwändige Vorarbeiten erforderlich sind, dass diese Vorarbeiten auf der Baustelle auszuführen sind, und dass die Vorarbeiten insbesondere dann sehr anspruchsvoll sind, wenn eine Vielzahl von Fertigbauwänden auf einer Bodenplatte, insbesondere einer sehr unebenen Botenplatte, anzuordnen und zu befestigen sind.

Das Dokument EP2738401B1 offenbart ein Schnellmontageelement, welches ein schnelles Befestigen von Fertigbauwänden an einem Einbauort erlaubt. Üblicherweise werden diese Schnellmontageelemente bereits werkseitig in die Fertigbauwand eingelassen. Am Aufstellort werden vor der Montage der Fertigbauwand Gewindestangen, beispielsweise in Form von Ankerschrauben, in den Untergrund eingebracht. Daraufhin werden die Fertigbauwände am Aufstellort abgesenkt, sodass die Gewindestangen in die Schnellmontageelemente eingreifen und von diesen gehalten werden. Solche Schnellmontageelemente weisen jedoch den Nachteil auf, dass nur ein einmaliges Verbinden von Schnellmontageelement und Gewindestange möglich ist, was bedeutet, dass diese Verbindung anschliessend nicht mehr oder nur sehr aufwändig gelöst werden kann. Nachträgliche Korrekturen und Anpassungen derart befestigter Fertigbauwände sind somit nicht mehr möglich oder nur noch mit einem erheblichen Aufwand möglich. Zum Einstellen der Höhe dient eine auf ein Gewinde aufgeschraubte Mutter. Es ist äusserst umständlich und daher zeitaufwändig diese Mutter zu drehen. Zudem ist die Tragfähigkeit dieser Schnellmontageelemente begrenzt, sodass zum Tragen schwererer Fertigbauwände der Gebrauch von zusätzlichen Schnellmontageelementen erforderlich ist.

Ausgehend von dem genannten Stand der Technik liegt der vorliegenden Erfindung die Aufgabe zugrunde, solche und weitere Nachteile des Standes der Technik zumindest zu reduzieren und insbesondere ein Wandsystem umfassend Fertigbauwände sowie ein Verfahren zum Erstellen eines Wandsystems umfassend Fertigbauwände anzugeben, welches ein einfacheres und effizienteres Erstellen von Wandsystemen umfassend Fertigbauwände erlaubt.

Diese Aufgabe wird durch ein Wandsystem sowie ein Verfahren zum Erstellen eines Wandsystems aufweisend die Merkmale der unabhängigen Ansprüche gelöst. Vorteilhafte Ausgestaltungen und Weiterbildungen sind Gegenstand der abhängigen Ansprüche.

Die Aufgabe wird insbesondere gelöst mit einem Wandsystem umfassend eine Fertigbauwand und mehrere Befestigungsvorrichtungen, wobei die Fertigbauwand mittels mehreren Befestigungsvorrichtungen mit einem Einbauort verbunden sind, wobei die Fertigbauwand für jede der Befestigungsvorrichtungen mit einer Ausnehmung versehen ist, wobei jede der Befestigungsvorrichtungen ein Montageelement, ein Befestigungselement und ein Arretierelement umfasst, wobei das Montageelement eine Längsachse aufweist und in Verlaufsrichtung der Längsachse einen ersten Teilabschnitt und anschliessend einen zweiten Teil-abschnitt aufweist, wobei das Montageelement entlang des ersten Teilabschnittes eine konzentrisch zur Längsachse verlaufende, als Sackloch ausgestaltete Innenbohrung mit einem Innengewinde aufweist, und wobei das Montageelement im Bereich des zweiten Teilabschnittes eine senkrecht zur Längsachse verlaufende Querbohrung aufweist, wobei das Befestigungselement ein Aussengewinde umfasst, welches in die Innenbohrung eingeschraubt ist, wobei das Montageelement in der zugehörigen Ausnehmung angeordnet ist, und wobei das Arretierelement durch die Querbohrung des Montageelementes und zumindest teilweise durch die Fertigbauwand verläuft.

Die Aufgabe wird weiter insbesondere gelöst mit einem Verfahren zum Erstellen eines Wandsystems, indem eine Fertigbauwand aufweisend Ausnehmung erstellt wird, indem eine Mehrzahl von Befestigungselementen umfassend Aussengewinde an vorherbestimmten Einbauorten derart verankert werden, dass die Aussengewinde über die Einbauorte vorstehen, indem je ein Montageelement durch Drehen um dessen Längsachse auf die jeweiligen Aussengewinde aufgeschraubt werden und durch das Drehen zudem jedes Montageelement auf eine vorherbestimmte Höhe eingestellt wird, indem die Fertigbauwand abgesenkt wird bis die Montageelemente zumindest teilweise in die entsprechende Ausnehmung zu liegen kommen, und indem jeweils ein Arretierelement durch die Querbohrung des Montageelementes und zumindest teilweise durch die Fertigbauwand verlaufend eingeführt wird, sodass die Fertigbauwand über die Befestigungsvorrichtung fest mit dem Einbauort verbunden ist.

Das erfindungsgemässe Wandsystem weist den Vorteil auf, dass alle erforderlichen Arbeitsschritte zum Aufbau des Wandsystems umfassend Fertigbauwände, auch als Holzrahmen bezeichnet, effizient, kostengünstig und zuverlässig erfolgen, wobei jederzeit auch Korrekturen vorgenommen werden können. Beim Aufbau des Wandsystems auf der Baustelle ist ein exaktes Positionieren und Nivellieren und ein richtiges Verankern von zentraler Bedeutung. Beim Aufbau des erfindungsgemässen Wandsystems werden in einem ersten Arbeitsschritt Befestigungselemente umfassend ein Aussengewinde derart in einem Untergrund verankert, dass die Aussengewinde über den Untergrund vorstehen. Solche Befestigungselemente, beispielsweise ausgestaltet als Bolzenanker, sind sehr einfach zu positionieren und im Untergrund zu befestigen. Daraufhin werden Montageelemente auf die vorstehenden Aussengewinde aufgeschraubt. Die Montageelemente umfassen vorteilhafterweise eine zumindest teilweise zylinderförmige Aussenkontur, vorzugweise mit einem derartigen Durchmesser, dass das Montageelement gut in der Hand liegt, und somit mit den Fingern oder mit der Hand sehr angenehm gedreht werden kann. Die Höhe jedes Montageelementes kann durch ein entsprechendes Drehen um dessen Längsachse individuell eingestellt werden, wobei die Montageelemente als Auflage für die Fertigbauwand dienen, sodass durch die Höheneinstellung der einzelnen Montageelemente letztendlich die Höheneinstellung beziehungsweise auch die Nivellierung der gesamten Fertigbauwand erfolgt. Sobald alle einer Fertigbauwand zugeordneten Montageelemente eingestellt sind, kann die Fertigbauwand abgesenkt werden, wobei die Fertigbauwand a deren Unterkante Ausnehmungen zur zumindest teilweisen Aufnahme der Montageelemente aufweist. Die Fertigbauwand wird abgesenkt, bis diese auf den Montageelementen aufliegt und von diesen getragen wird. Nach diesem Arbeitsschritt kann nochmals überprüft werden, ob sich alle Montageelemente in der gewünschten Position befinden. Ansonsten könnte die Fertigbauwand nochmals angehoben und die Höhe des Montageelementes durch ein entsprechendes Drehen korrigiert werden. Sobald die Fertigbauwand zufriedenstellend auf den Montageelementen aufliegt, wird deren gegenseitige Verbindung gesichert, indem Arretierelemente, vorzugsweise in Form von Stabdübeln, durch die Fertigbauwand und durch das Montageelement hindurch eingeführt werden, sodass die Fertigbauwand insbesondere auch gegen ein Abheben gesichert ist. Falls erforderlich kann sogar in diesem Zustand nochmals einen Höhenkorrektur der Fertigbauwand vorgenommen werden, indem die Arretierelemente nochmals entfernt werden, die Fertigbauwand nochmals angehoben wird, und durch ein Drehen des entsprechenden Montageelementes dessen Höhe korrigiert wird. Danach wird die Fertigbauwand wieder abgesenkt und das Arretierelement wieder eingeführt. Das erfindungsgemässe Wandsystem weist somit den Vorteil auf, dass eine Korrektur oder eine nachträgliche Anpassung der Höheneinstellung einfach möglich ist. Das erfindungsgemässe Wandsystem weist zudem den Vorteil auf, dass auf eine vorgängig zu montierende Montageschwelle, auf welcher nachträglich die Fertigbauwand aufgebaut werden könnte, verzichtet werden kann, da das erfindungsgemässe Wandsystem eine Höheneinstellung und allfällige Korrekturen der Höheneinststellung auf einfache Weise zulässt. Der Verzicht auf eine Montageschwelle reduziert die Baukosten und erlaubt zudem eine bessere Verankerung der Fertigbauwände.

Der Montageelement ist zur Übertragung grösserer Kräfte ausgestaltet, wobei das Montageelement einen ersten Längsabschnitt, aufweist, welcher an das Aussengewinde anschraubbar ist, ein besondere, zur Übertragung der Kräfte angepasste Wandstärke aufweist, und wobei das Montageelement einen zweiten Längsabschnitt aufweist, welcher zur Aufnahme des Arretierelementes eine Querbohrung aufweist, und welcher zur Übertragung der angreifenden Kräfte ebenfalls entsprechend angepasst ausgestaltet ist.

Besonders vorteilhaft weist das Montageelement an dessen einem Ende, am zur Querbohrung gegenüberliegenden Ende, ein vorstehendes Stützteil auf, welches vorzugsweise flanschartig ausgestaltet ist, wobei die Fertigbauwand zumindest während der Montage an diesem Stützteil aufliegt. Diese Ausgestaltung des Montageelementes weist zudem den Vorteil auf, dass die montierte Fertigbauwand auch sehr geringe Höhen bezüglich des Untergrunds aufweisen kann.

Das Montageelement ist vorzugsweise einteilig gefertigt, und besteht vorzugsweise aus Metall oder einem faserverstärkten Kunststoff.

In einer Vorteilhaften Ausgestaltung weist das Montageelement eine Koppelstelle bzw. eine Werkzeugeingriffsstelle auf, an welche beispielsweise eine Messvorrichtung, z.B. ein Prisma befestigbar ist, um beispielsweise mit einem Tachymeter die Höhe des Montageelementes zu messen, um danach die gewünschte Höhe des Montageelementes einzustellen. Die Einstellung der Höhe kann von Hand oder über einen entsprechenden Antrieb des Montageelementes auch automatisch erfolgen.

Verschiedene Ausführungsformen der Erfindung werden nachfolgend anhand von Zeichnungen beschrieben, wobei gleiche oder entsprechende Elemente grundsätzlich mit gleichen Bezugszeichen versehen sind. Es zeigen:
- Fig. 1: einen Längsschnitt entlang der Schnittlinie A-A durch das erfindungsgemässe Wandsystem;
- Fig. 2: eine Seitenansicht eines Teils des Wandsystems gemäss Fig. 1;
- Fig. 3: ausschnittweise einen Querschnitt entlang der Schnittline B-B durch das Wandsystem gemäss Fig. 2;
- Fig. 4: eine perspektivische Ansicht auf ein erstes Ausführungsbeispiel eines Montageelements;
- Fig. 5: einen Längsschnitt durch das Montageelement gemäss Fig. 4;
- Fig. 6: einen Querschnitt durch das Montageelement gemäss Fig. 5 entlang der Schnittlinie C-C;
- Fig. 7: einen Querschnitt durch das Montageelement gemäss Fig. 5 entlang der Schnittlinie D-D;
- Fig. 8: eine perspektivische Ansicht eines weiteren Ausführungsbeispiels eines Montageelementes;
- Fig. 9: einen Längsschnitt durch das Montageelement gemäss Fig. 8, wobei dieses am Einbauort montiert ist;
- Fig. 10: eine perspektivische Ansicht eines weiteren Ausführungsbeispiels eines Montageelementes;
- Fig. 11: eine Seitenansicht eines weiteren Ausführungsbeispiels eines Montageelementes;
- Fig. 12: eine Draufsicht eines weiteren Ausführungsbeispiels eines Montageelementes, teilweise im Schnitt.

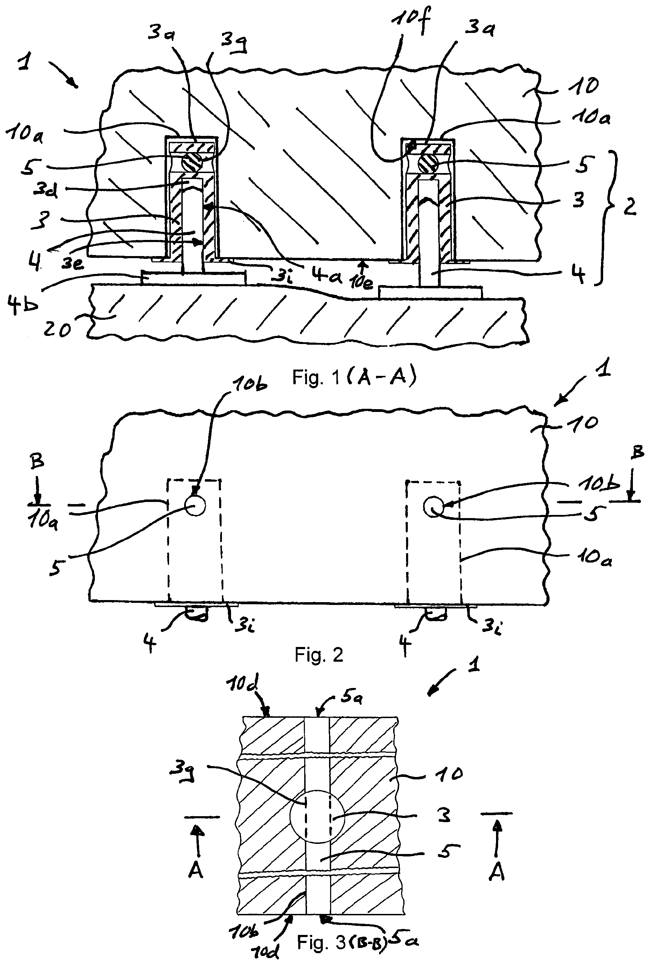

Die Figuren 1 bis 3 zeigen ein Ausführungsbeispiel eines erfindungsgemässen Wandsystems 1 umfassend eine Fertigbauwand 10 und eine Mehrzahl von Befestigungsvorrichtungen 2, wobei jede der Befestigungsvorrichtungen 2 ein Montageelement 3, ein Befestigungselement 4 und ein Arretierelement 5 umfasst. Figur 1 zeigt einen Längsschnitt durch das Wandsystem 1 entlang der Schnittline A-A gemäss Figur 3, wobei das Befestigungselement 4 nicht als geschnitten dargestellt ist. Im dargestellten Ausschnitt gemäss Figur 1 wird die Fertigbauwand 10 von zwei Befestigungsvorrichtungen 2 getragen und gehalten. Es könnten jedoch auch zusätzliche Befestigungsvorrichtungen 2 zum Tragen der Fertigbauwand 10 angeordnet sein. Zudem könnten auch mehrere Fertigbauwände 10 angeordnet und von Befestigungsvorrichtungen 2 getragen sein. Jedes der dargestellten Befestigungselemente 4 ist über einen ersten Befestigungsabschnitt 4b fest mit dem Einbauort 20, beispielsweise einer Betonplatte, verbunden. Die Verbindung zwischen dem Befestigungselement 4 bzw. dem ersten Befestigungsabschnitt 4b und dem Einbauort 20 ist nicht im Detail dargestellt, und könnte beispielsweise mittels einer Schraubverbindung oder mittels einer Klebeverbindung erfolgen. Das Befestigungselement 4 umfasst einen zweiten Befestigungsabschnitt 4c aufweisend ein Aussengewinde 4a. Das Montageelement 3 umfasst einen Innenbohrung 3d mit einem bezüglich dem Aussengewinde 4a angepassten Innengewinde 3e, sodass das Montageelement 3 durch ein Drehen um dessen Längsachse auf das Aussengewinde 4a aufschraubbar und dadurch am Befestigungselement 4 befestigbar ist. Durch das Drehen bzw. das Aufschrauben des Montageelementes 3 auf das Aussengewinde 4a wird zudem die Distanz zwischen dem ersten Befestigungsabschnitt 4b und dem Montageelement 3 verändert, beziehungsweise wird die Eindringtiefe des zweiten Befestigungsabschnittes 4c in die Innenbohrung 3d verändert, sodass durch ein entsprechendes Drehen des Montageelementes 3 um dessen Längsachse der Abstand des Montageelementes 3 bezüglich dem ersten Befestigungsabschnitt 4b beziehungsweise der Abstand zwischen dem Montageelement 3 und der Oberfläche des Einbauorts 20 einstellbar ist. Wie aus Figur 1 ersichtlich, kann die Oberfläche des Einbauortes 20 uneben sein, wobei die Montageelemente 3 vorzugsweise wie in Figur 1 dargestellt derart eingestellt werden, dass beide Montageelemente 3 in horizontaler Richtung dieselbe Höhe aufweisen, und dadurch beispielsweise einen vorzugsweise horizontal verlaufenden Anschlag für eine Unterkante 10e der Fertigbauwand 10 ausbilden. Ein solches Einstellen der Höhe der einzelnen Montageelemente 3 wird auch als ein sogenanntes Nivellieren bezeichnet, weil dadurch die Höhe als auch den Verlauf der Fertigbauwand 10 bezüglich der Horizontalen eingestellt wird.

Bevor die Montage der Fertigbauwand 10 erfolgt, werden in vorbereitenden Verfahrensschritten die Befestigungselemente 4 mit dem Einbauort verbunden, und werden in einem nachfolgenden Schritt die Montageelement 3 auf die jeweiligen Befestigungselemente 4 aufgeschraubt und durch ein entsprechendes Drehen auf eine vorherbestimmte Höhe eingestellt. Wie aus Figur 1 ersichtlich weist die Fertigbauwand 10 vorbereitete Ausnehmung 10a zur Aufnahme jeweils eines Montageelementes 3 auf, wobei der Montageort der Befestigungsvorrichtungen 2 und die Positionierung der Ausnehmung 10a in der Wand 10 derart gegenseitig angepasst angeordnet sind, dass die Fertigbauwand 10, nachdem die Höhe der einzelnen Montageelemente 3 eingestellt ist, abgesenkt werden kann, und dabei je ein Montageelement 3 in eine zugeordnete Ausnehmung 10a zu liegen kommt, sodass die Fertigbauwand 10 nach dem Absenken von den Montageelementen 3 getragen wird.

Vorzugsweise werden die Bohrungen 20a für die Befestigungselemente 4 basierend auf einem vorgegebenen bzw. berechneten Bohrplan am Einbauort 20 erstellt, wobei diese Löcher für die Befestigungselemente 4 manuell oder vorzugsweise automatisch am Einbauort 20 positioniert und gebohrt werden, und wobei vorzugsweise basierend auf einem Höhenplan die Höhe H der einzelnen Montageelemente 3 eingestellt wird, entweder manuell oder vorzugsweise automatisch über eine am Montageelement 3 angreifende Antriebsvorrichtung, welche das Montageelement 3 entsprechend dreht.

Im dargestellten Ausführungsbeispiel umfasst jedes Montageelement 3 ein flanschförmig vorstehendes Stützteil 3i mit einer Stützfläche 3k, wobei diese Stützteile 3i die Fertigbauwand 10 über deren am Stützteil 3i aufliegende Unterkante 10e tragen können. Bevorzugt wird die Fertigbauwand 10 nach erfolgtem Absenken nur von den Stützteilen 3i getragen. Die Ausnehmung 10a kann jedoch auch derart ausgestaltet sein, dass diese am Grund eine zweite Auflagefläche 10f ausbildet, sodass nach dem Absenken der Fertigbauwand 10 jeweils die oberen Stirnseiten 3a der Montageelemente 3 an der zweiten Auflagefläche 10f anliegt und dabei die Fertigbauwand 10 tragen. Die Fertigbauwand 10 wird nach deren Absenken somit vorzugsweise entweder mehrheitlich oder vollständig über die Stützteile 3i, mehrheitlich oder vollständig über die obere Stirnseite 3a oder über eine Kombination von Stützteile 3i und obere Stirnseiten 3a getragen.

Nach erfolgtem Absenken der Fertigbauwand 10 auf die Montageelemente 3 wird anschliessend ein durch das Montageelement 3 und die Fertigbauwand 10 verlaufendes Arretierelement 5 eingeführt, um die Fertigbauwand 10 insbesondere gegen ein Abheben zu sichern, bzw. um die Fertigbauwand 10 mit Hilfe der Befestigungsvorrichtung 2 mit dem Einbauort 20 zu verbinden. Das Arretierelement 5 kann zudem, falls vorteilhaft, derart angeordnet sein, dass dieses die Fertigbauwand 10 teilweise oder ganz trägt.

Figur 2 zeigt eine Seitenansicht des Wandsystems 1 gemäss Figur 1, wobei die Befestigungselemente 4 nur teilweise dargestellt sind. Figur 2 zeigt strichliert die in der Fertigbauwand 10 vorgefertigten Ausnehmung 10a, in welchen das Montageelement 3 angeordnet ist, wobei vom Montagelement 3 nur das Stützteil 3i dargestellt ist. Die Fertigbauwand 10 umfasst zu jeder Ausnehmung 10a einen zugeordneten Arretierkanal 10b, durch welchen das Arretierelement 5 verläuft bzw. einführbar ist. Das Arretierelement 5 ist vorzugsweise stabförmig, beispielsweise als Stabdübel ausgestaltet.

Wie aus den Figuren 1 und 3 ersichtlich weist das Montageelement 3 eine zur Aufnahme des Arretierelementes 5 vorgesehene Querbohrung 3g auf. Figur 3 zeigt einen Schnitt durch das Wandsystem entlang der Schnittlinie B-B gemäss Figur 2, wobei das Montageelement 3 und das Arretierelement 5 nicht geschnitten dargestellt sind. Wie aus Figur 3 ersichtlich ist die Fertigbauwand 10 mit Hilfe des stabförmigen Arretierelementes 5, welches durch den Arretierkanal 10b und die Querbohrung 3g des Montageelementes 3 verläuft, mit dem Montageelement 3 verbunden.

Vorzugsweise werden die Arretierkanäle 10b bereits bei der Herstellung der Fertigbauwand 10 erstellt. Die Arretierkanäle 10b sind vorzugsweise derart angeordnet, dass bei einer auf die Montageelemente 3 abgesenkten und auf diesen aufliegenden Fertigbauwand 10 die Querbohrung 3g des jeweiligen Montageelementes 3 mit dem zugeordneten Arretierkanal 10b fluchtet, sodass das Arretierelement 5 problemlos in die Fertigbauwand 10 und die Querbohrung 3g einführbar ist, und das Arretierelement 5 nach dessen Einführen die in Figur 3 dargestellte Lage einnimmt, und die Fertigbauwand über die Befestigungsvorrichtung 2 somit sicher mit dem Einbauort 20 verbunden ist. Der Arretierkanal 10b könnte jedoch auch erst nach dem Aufsetzen der Fertigbauwand 10 auf das Montageelement 3 erstellt werden. Da beim Montageelement 3 der Abstand zwischen dem Stützteil 3i und der Querbohrung 3g vorgegeben ist, kann die Lage der Querbohrung 3g, wie aus Figur 2 ersichtlich, ausgehend vom Stützteil 3i, auf einfache Weise bestimmt und an der Aussenoberfläche der Fertigbauwand 10 beispielsweise angezeichnet werden, und anschliessend der Arretierkanal 10b in die Fertigbauwand 10 gebohrt werden.

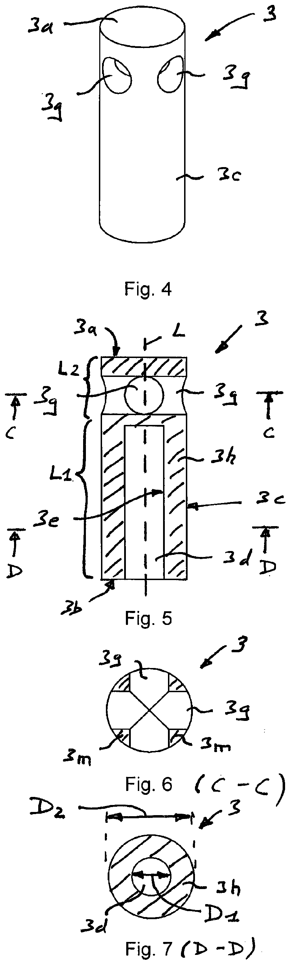

Die Figuren 4 bis 7 zeigen verschiedene Ansichten eines weiteren Ausführungsbeispiels einer Montageelementes 3. Das Montageelement 3 ist zylinderförmig ausgestaltet, weist eine Längsachse L auf, und weist zudem eine obere Stirnseite 3a, eine untere Stirnseite 3b, eine Seitenfläche 3c sowie eine Querbohrung 3g auf. Bei diesen Montageelementen 3 liegt eine Fertigbauwand 10 nach deren Absenken einzig auf den oberen Stirnseiten 3a der Montageelemente 3 auf. Wie in Figur 5 dargestellt weist das Montageelement 3 in Verlaufsrichtung der Längsachse L einen ersten Teilabschnitt L1 und anschliessend einen zweiten Teilabschnitt L2 auf. Das Montageelement 3 weist entlang des ersten Teilabschnittes L1 eine konzentrisch zur Längsachse L verlaufende, als Sackloch ausgestaltete Innenbohrung 3d mit einem Innengewinde 3e auf, wobei der erste Teilabschnitt L1 entlang des Sacklochs eine Aussenwand 3h aufweist. Das Montageelement 3 weist im Bereich des zweiten Teilabschnittes L2 eine senkrecht zur Längsachse L verlaufende Querbohrung 3g auf. Figur 6 zeigt einen Querschnitt durch Figur 5 entlang der Schnittlinie C-C. Im dargestellten Ausführungsbeispiel weist das Montageelement 3 zwei gegenseitig senkrecht verlaufende bzw. in Umfangsrichtung um 90 Grad versetzte Querbohrungen 3g auf. Das Montageelement 3 könnte jedoch auch nur eine einzige Querbohrung 3g aufweisen, oder beispielsweise auch weitere, z.B. drei in Umfangsrichtung um je 60 Grad versetzte Querbohrungen aufweisen. Allenfalls ist dabei der Durchmesser der Querbohrungen 3g zu reduzieren, damit die Verbindungsstellen 3m des Montageelementes 3 eine genügend hohe mechanische Stärke aufweisen. Figur 7 zeigt entlang der Schnittlinie D-D gemäss Figur 5 einen Querschnitt durch den ersten Teilabschnitt L1 des Montageelementes 3, mit Innenbohrung 3d und Seitenwand 3h.

Eine Aufgabe des Montageelementes 3 besteht darin, die an der Fertigbauwand 10 angreifenden Kräfte langfristig zuverlässig zum Befestigungselement 4 zu übertragen, wobei zu berücksichtigen ist, dass an der Fertigbauwand 10 später, nach erfolgter Montage, verschiedenste, teilweise erhebliche Kräfte, beispielsweise verursacht durch angreifende Winde oder Schneedruck, anliegen können, welche sicher zum Befestigungselement 4 zu übertragen sind, wobei es sich bei diesen Kräften situationsabhängig insbesondere um Stoss-, Zug- , Scher- oder Wechselkräfte handeln kann. Die Befestigungsvorrichtung 2 und insbesondere das Montageelement 3 ist somit bevorzugt derart ausgestaltet, dass solche Kräfte ohne Beschädigung des Montageelementes 3 übertragbar sind. Der erste Teilabschnitt L1 dient im wesentlichen dazu Kräfte zwischen dem Montageelement 3 und dem als Gewindestange ausgestalteten zweiten Befestigungsabschnitt 4c zu übertragen. Der zweite Teilabschnitt L2 dient unter anderem dazu Kräfte zwischen dem in der Querbohrung 3g gehaltenen Arretierelement 5 und dem Montageelement 3 zu übertragen. In einer bevorzugten Ausgestaltung weist das Arretierelement 5 bei allen Ausführungsbeispielen, vorzugsweise ausgestaltet als Stabdübel, eine Länge im Bereich von 4 bis 10 mal dem Aussendurchmesser D2 des Montageelementes 3 auf. Dieses unter Umständen relativ lange Arretierelement 5 kann erhebliche Kräfte, insbesondere auch ein erhebliches Drehmoment auf das Montageelement 3 bewirken. Ein mechanisch robustes Montageelement 3 lässt sich beispielsweise, wie in den Figuren 3 bis 7 dargestellte, dadurch erzielen, dass das Montageelement 3 aus einem zylinderförmigen Vollkörper gefertigt ist, in welchen die als Sackbohrung ausgestaltete Innenbohrung 3d und die ein bis zwei Querbohrungen 3g eingelassen sind. Vorzugsweise ist der Aussendurchmesser D2 des Montageelementes 3 zumindest doppelt so gross wie der Innendurchmesser D1 der Innenbohrung 3d, um dadurch eine genügende Dicke der Seitenwand 3h zu erzielen, um Kräfte zuverlässig vom Montageelement 3 auf den zweiten Befestigungsabschnitt 4c des Befestigungselementes 4 zu übertragen. Vorzugsweise liegt der Innendurchmesser in einem Bereich zwischen 6 bis 12 mm, vorzugsweise zwischen 8 und 10 mm. Die Innenbohrung 3d mündet nicht in die Querbohrung 3g sondern ist wie in Figur 5 dargestellt als Sackloch ausgestaltet, weshalb der zweite Teilabschnitt L2 durch die Innenbohrung 3d keine Schwächung erfährt. Vorzugsweise beträgt die Distanz zwischen Ende des Sacklochs und der Querbohrung 3g zumindest ein Viertel des Innendurchmessers D1. Der Durchmesser der Querbohrung 3g ist vorzugsweise derart gewählt, dass die Summe aller Verbindungsstellen 3m zumindest ein Viertel der durch den Aussendurchmesser D2 definierten Gesamtfläche bilden. Dadurch ist sichergestellt, dass die vom Arretierelement 5 über die Querbohrung 3g eingeleiteten, zu erwartenden Kräfte keinen Schaden am ersten Teilabschnitt L1 verursachen.

Wie aus den Figuren 1 bis 3 ersichtlich, muss zum Einführen des Arretierelementes 5 in die auf die Montageelemente 3 abgesenkte Fertigbauwand 10 das Montageelement 3 derart ausgerichtet angeordnet sein, dass die Öffnungen der Querbohrung 3g zur jeweiligen Wandaussenfläche 10d ausgerichtet sind, sodass in Kombination mit dem vorhandenen oder noch auszubildenden Arretierkanal 10b eine durchgehende Öffnung zum Einführen des Arretierelementes 5 entsteht. Die in den Figuren 4 bis 7 dargestellte Ausführungsform des Montageelementes mit zwei in Umfangsrichtung jeweils um 90 Grad versetzt angeordneten Querbohrungen 3g weist den Vorteil auf, dass jeweils nur eine Vierteldrehung des Montageelementes 3 erforderlich ist, um die Querbohrung 3g wieder derart auszurichten, dass die Querbohrung 3g bei abgesenkter Fertigbauwand 10 zur jeweiligen Wandaussenfläche 10d ausgerichtet ist. Auf Grund der Gewinde 3e, 4a wird beim Drehen des Montageelementes 3 die Höhe des Montageelementes 3 bezüglich dem Befestigungselement 4 verändert, wobei die vorhandene Gewindesteigung der Gewinde 3e, 4a beim Drehen letztendlich die Höhenveränderung bestimmt. Die Gewindesteigung ist vorzugsweise derart gewählt, dass eine Umdrehdung um 360° eine Höhenveränderung im Bereich von 0.5 mm bis 2 mm, vorzugsweise von 0.8 mm ergibt. Das in den Figuren 4 bis 7 dargestellte Ausführungsbeispiel eines Montageelementes 3 weist den Vorteil auf, dass die Höhe des Montageelementes bezüglich dem Befestigungselement 4 sehr genau, und in kleinen Schritten einstellbar ist, d.h. der kleinste Schritt ist eine Drehung des Montageelementes 3 um 90°, was vorzugsweise einer Höhenveränderung von 0.2 mm entspricht. Die Höhe kann somit sehr genau eingestellt werden. Die In einer weiteren, vorteilhaften Ausführungsform könnte das Montageelement 3 auch nur eine einzige Querbohrung 3g aufweist, sodass für den kleinsten Schritt der Höheneinstellung eine Drehung des Montageelementes 3 um 180° erforderlich wäre.

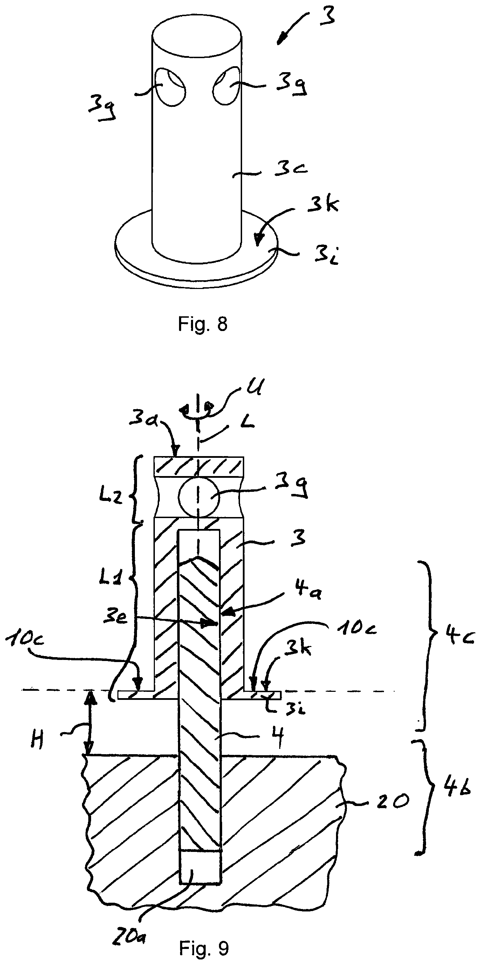

Figur 8 zeigt in einer perspektivischen Ansicht das bevorzugte, auch in Figur 1 dargestellte Montageelement 3. Als einziger Unterschied zur Ausführungsform gemäss den Figuren 4 bis 7 weist das Montageelement 3 gemäss Figur 8 unmittelbar nachfolgend dem zylinderförmigen Abschnitt ein flanschartig vorstehendes Stützteil 3i auf, das eine Stützfläche 3k ausbildet. Vorzugsweise bildet das Stützteil 3i in Verlaufsrichtung der Längsachse L das eine Ende des Montageelementes 3. Das Stützteil 3i ist in Umfangsrichtung vorzugsweise kreisförmig und konzentrisch zur Längsachse L verlaufend ausgestaltet, könnte jedoch auch exzentrisch zur Längsachse L angeordnet sein und/oder könnte in Umfangsrichtung jede beliebige Form aufweist, beispielsweise auch rechteckig oder quadratisch, um dadurch beispielsweise eine für die Fertigbauwand 10 grössere oder besser angepasste Stützfläche 3k auszubilden. Das Stützteil 3i kann als separates Teil ausgestaltet sein, welches mit dem restlichen Montageelement 3 fest verbunden ist Besonders vorteilhaft ist das Montageelement 3 umfassend das Stützteil 3i einteilig bzw. einstückig ausgestaltet, indem dieses zum Beispiel aus einem einigen Grundkörper gefertigt wird. Die in Figur 8 und 9 dargestellte Ausführungsform des Montageelementes 3 weist den Vorteil auf, dass die auf die Auflagefläche 10c wirkenden Kräfte der Fertigbauwand 10 gut über die Gewinde 3e und 4a auf den zweiten Befestigungsabschnitt 4c übertragbar sind. Die in Figur 8 und 9 dargestellte Ausführungsform des Montageelementes 3 weist den weiteren Vorteil auf, dass die minimale Höhe H, das heisst der minimale Abstand der Unterkante 10e der Fertigbauwand 10 bezüglich der Oberfläche des Einbauorts 20 sehr klein eingestellt werden kann, und im Wesentlichen der vertikalen Dicke des Stützteils 3i entspricht. Mit Hilfe des Montageelementes 3 kann die Höhe H daher in einem relativ grossen Bereich eingestellt werden.

Figur 9 zeigt das Montageelement 3 gemäss Figur 8 verbunden mit einem Befestigungselement 4, das in einer Bohrung 20a im Einbauort 20 verankert ist. Das Befestigungselement 4 weist einen nicht im Detail dargestellten ersten Befestigungsabschnitt 4b und einen zweiten Befestigungsabschnitt 4c auf. Das Befestigungselement 4 ist beispielswiese als eine Ankerschraube, ein Bolzenanker oder eine Betonschraube ausgestaltet, umfassend jeweils ein Aussengewinde 4a. Das Befestigungselement wird mit dem Befestigungsabschnitt 4b, z.B. mit dem Anker der Ankerschraube, in der Bohrung 20a befestigt. Das Befestigungselement 4 ist im zweiten Befestigungsabschnitt 4c vorzugsweise als eine Gewindestange aufweisend ein Aussengewinde 4a ausgestaltet. Besonders vorteilhaft ist das ganze Befestigungselement 4 beispielsweise als Ankerschraube, Bolzenanker oder Betonschraube ausgestaltet. Das Montageelement 3 wird durch ein Drehen um dessen Längsachse L in Drehrichtung U mit dessen Innengewinde 3e auf das Aussengewinde 4a aufgeschraubt, wobei die Eindringtiefe des Befestigungselements 4 in das Montageelement 3 durch ein entsprechendes Drehen des Montageelementes 3 in Drehrichtung U einstellbar ist. Im dargestellten Ausführungsbeispiel ist das Montageelement 3 derart angeordnet, dass die Stützfläche 3k einen vorherbestimmten Abstand H bezüglich der Oberfläche des Einbauortes 20 aufweist. In einer vorteilhaften Ausgestaltung liegt die Unterkante 10e der Fertigbauwand 10 über eine Auflagefläche 10c auf der Stützfläche 3k auf, sodass letztendlich die mit dem Montageelement 3 verbunden Fertigbauwand 10 einen Abstand H bezüglich dem Einbauort 20 aufweist.

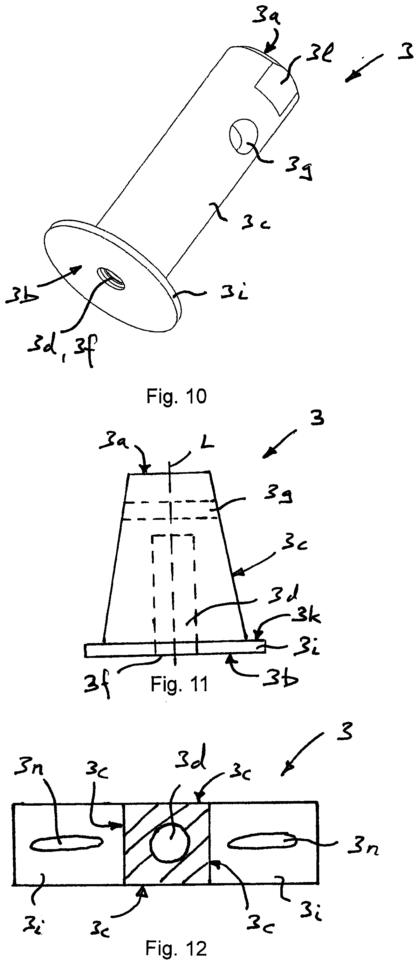

Figur 10 zeigt ein weiteres Ausführungsbeispiel eines Montageelementes 3 mit oberer Stirnseite 3a, unterer Stirnseite 3b, Innenbohrung 3d bzw. Bohrungsöffnung 3f, Seitenfläche 3c und einer Querbohrung 3g. Das dargestellte Montageelement 3 weist eine einzige Querbohrung 3g auf, könnte jedoch vorteilhafterweise, wie bereits beschrieben, auch mehrere in Umfangsrichtung versetzt angeordnete Querbohrungen 3g aufweisen. Im Unterschied zur Ausführungsform gemäss Figur 8 ist in Figur 10 der Abschnitt zwischen Querbohrung 3g und oberer Stirnseite 3a länger ausgestaltet, und weist vorteilhafterweise ein Werkzeugeingriff 3l auf, an welchem ein entsprechend angepasstes Werkzeug angelegt werden kann, beispielsweise um das Montageelement 3 sicher und reproduzierbar in Umfangsrichtung U zu drehen. Vorteilhafterweise wird der Werkzeugeingriff 3l mit einem Nivelliergerät verbunden, welches das Montageelement 3 durch Drehen in Umfangsrichtung U in eine vorherbestimmte Höhe H einstellt.

Figur 11 zeigt ein weiteres Ausführungsbeispiel eines Montageelementes 3, dessen Seitenfläche 3c kegelstumpfförmig verlaufend ausgestaltet ist. Ansonsten ist das Montageelement 3 ähnlich ausgestaltet wie in Figur 10 dargestellt, nämlich umfassend eine obere Stirnseite 3a, eine untere Stirnseite 3b, eine Innenbohrung 3d, eine Querbohrung 3g sowie ein Stützteil 3i. Bei diese Ausführungsform kann die Stützfläche 3k und/oder die obere Stirnseite 3a und/oder die Seitenfläche 3c als Fläche zum Abstützen bzw. zum Tragen der Fertigbauwand 10 dienen.

Figur 12 zeigt in einer Draufsicht, teilweise im Schnitt, ein weiteres Ausführungsbeispiel eines Montageelementes 3. Das Montageelement 3 ist entlang des ersten Teilabschnittes L1 geschnitten und zeigt eine quadratische Form mit entsprechend gegenseitig senkrecht verlaufenden Seitenflächen 3c und einer senkrecht zur Betrachtungsebene verlaufenden Innenbohrung 3d. Das Stützteil 3i ist rechteckig ausgestaltet, und kann beispielsweise zudem noch vorstehende Elemente 3n aufweisen, die beispielsweise als Leitelemente oder als Zähne ausgestaltet sind, um beispielsweise an einer Unterkante 10e einer Fertigbauwand 10 einzugreifen.

In Umfangsrichtung der Längsachse L kann die Aussenkontur des Montageelementes 3, abgesehen vom allfällig vorhandenen Stützteil 3i, generell in einer Vielzahl von Formen ausgestaltet sein, zum Beispiel mehreckig, beispielsweise drei-, vier-, sechs- oder achteckig-, wobei die Seitenlängen vorzugsweise gleich lang sind. Die Aussenkontur könnte jedoch auch abgerundet verlaufend ausgestaltet sein, beispielsweise elliptisch, oder einer Mischform von eckig und rund. Ebenso kann die Aussenkontur das Stützteil 3i unter Ausbildung einer Stützfläche 3k in einer Vielzahl von Formen ausgestaltet sein, zum Beispiel mehreckig, beispielsweise drei-, vier-, sechs- oder achteckig-, wobei die Seitenlängen vorzugsweise gleich lang sind. Die Aussenkontur könnte jedoch auch abgerundet verlaufend ausgestaltet sein, oder einer Mischform von eckig und rund.

### Bezugszeichenliste

- 1: Wandsystem
- 2: Befestigungsvorrichtung
- 3: Montageelement
- 3a: obere Stirnseite
- 3b: untere Stirnseite
- 3c: Seitenfläche
- 3d: Innenbohrung, Sackloch
- 3e: Innengewinde
- 3f: Bohrungsöffnung
- 3g: Querbohrung
- 3h: Seitenwand
- 3i: Stützteil
- 3k: Stützfläche
- 3l: Werkzeugeingriff
- 3m: Verbindungsstellen
- 3n: vorstehendes Element
- 4: Befestigungselement
- 4a: Aussengewinde
- 4b: erster Befestigungsabschnitt
- 4c: zweiter Befestigungsabschnitt
- 5: Arretierelement
- 5a: Stirnseite Arretierelement
- 10: Fertigbauwand
- 10a: Ausnehmungen / Aufnahmehohlraum / Aufnahmeöffnung
- 10b: Arretierkanal
- 10c: Auflagefläche Fertigbauwand
- 10d: Wandaussenfläche
- 10e: Unterkante Fertigbauwand
- 10f: zweite Auflagefläche
- 20: Einbauort, Untergrund, Fundament, Boden
- 20a: Bohrung
- L: Längsachse
- L1: erster Teilabschnitt
- L2: zweiter Teilabschnitt
- D1: Innenquerschnitt
- D2: Aussenquerschnitt
- H: Höhe
- U: Umdrehungsrichtung

## Patentansprüche

1. Wandsystem (1) umfassend zumindest eine Fertigbauwand (10) sowie mehrere Befestigungsvorrichtungen (2), wobei die Fertigbauwand (10) mittels mehreren Befestigungsvorrichtungen (2) mit einem Einbauort (20) verbunden ist, und die Fertigbauwand (10) für jede der Befestigungsvorrichtungen (2) mit einer Ausnehmung (10a) versehen ist,
wobei jede der Befestigungsvorrichtungen (2) ein Montageelement (3), ein Befestigungselement (4) und ein Arretierelement (5) umfasst,
wobei das Montageelement (3) eine Längsachse (L) aufweist und in Verlaufsrichtung der Längsachse (L) einen ersten Teilabschnitt (L1) und anschliessend einen zweiten Teilabschnitt (L2) aufweist,
wobei das Montageelement (3) entlang des ersten Teilabschnittes (L1) eine konzentrisch zur Längsachse (L) verlaufende, als Sackloch ausgestaltete Innenbohrung (3d) mit einem Innengewinde (3e) aufweist, und wobei das Montageelement (3) im Bereich des zweiten Teilabschnittes (L2) eine senkrecht zur Längsachse (L) verlaufende Querbohrung (3g) aufweist,
wobei das Befestigungselement (4) ein Aussengewinde (4a) umfasst, welches in die Innenbohrung (3e) eingeschraubt ist,
wobei das Montageelement (3) in der zugehörigen Ausnehmung (10a) angeordnet ist, und
wobei das Arretierelement (5) durch die Querbohrung (3g) des Montageelementes (3) und zumindest teilweise durch die Fertigbauwand (10) verläuft.

2. Wandsystem gemäss Anspruch 1, **dadurch gekennzeichnet, dass** das Montageelement (3) zylinderförmig oder kegelstumpfförmig ausgestaltet ist.

3. Wandsystem nach Anspruch 2, **dadurch gekennzeichnet, dass** das Montageelement (3) im Bereich des ersten Teilabschnittes (L1) einen Aussendurchmesser (D2) aufweist, der zumindest doppelt so gross wie der Innendurchmesser (D1) der Innenbohrung (3d).

4. Wandsystem nach einem der Ansprüche 1 bis 3, **dadurch gekennzeichnet, dass** das Montageelement (3) zudem ein sich radial von der Längsachse (L) wegerstreckendes Stützteil (3i), insbesondere einen Flansch aufweist, wobei das Stützteil (3i) in Verlaufsrichtung der Längsachse (L), im Bereich des ersten Teilabschnittes (L1), das eine Ende des Montageelementes (3) ausbildet, und dass das Montageelement (3) im Bereich des zweiten Teilabschnittes (L2) eine obere Stirnseite (3a) aufweist, welche das andere Ende des Montageelementes (3) ausbildet.

5. Wandsystem nach Anspruch 4, **dadurch gekennzeichnet, dass** der Stützteil (3i) einen Aussendurchmesser im Bereich von 3 cm bis 6 cm aufweist.

6. Wandsystem nach einem der Ansprüche 4 bis 5, **dadurch gekennzeichnet, dass** das Stützelement (3i) ausserhalb der Ausnehmung (10a) an der zugehörigen Fertigbauwand (10) anliegt.

7. Wandsystem nach einem der vorhergehenden Ansprüche, **dadurch gekennzeichnet, dass** das Montageelement (3) einstückig ausgebildet ist.

8. Wandsystem nach einem der vorhergehenden Ansprüche, **dadurch gekennzeichnet, dass** das Montageelement (3) als einzige Öffnungen die Innenbohrung (3d) und die Querbohrung (3g) aufweist.

9. Wandsystem nach einem der vorhergehenden Ansprüche, **dadurch gekennzeichnet, dass** im zweiten Teilabschnitt (L2) zwei senkrecht zur Längsachse (L) verlaufende Querbohrungen (3g) angeordnet sind, welche in Umfangsrichtung zur Längsachse (L) gegenseitig um 90° versetzt angeordnet sind, und welche in Verlaufsrichtung der Längsachse (L) in gleicher Höhe angeordnet sind.

10. Wandsystem nach einem der vorhergehenden Ansprüche, **dadurch gekennzeichnet, dass** die Fertigwand (10) einen Arretierkanal (10b) aufweist, durch welchen das Arretierelement (5) verläuft.

11. Wandsystem nach einem der vorherigen Ansprüche, **dadurch gekennzeichnet, dass** das Arretierelement (5) als ein Stabdübel ausgestaltet ist, mit einer Länge im Bereich von 4-bis 10-mal dem Aussendurchmesser (D2) des Montageelementes (3).

12. Wandsystem nach Anspruch 11, **dadurch gekennzeichnet, dass** das Arretierelement (5) einen Durchmesser im Bereich von 5 mm bis 20 mm aufweist.

13. Verfahren zum Erstellen eines Wandsystems (1) gemäss einem der Ansprüche 1 bis 12, indem eine Fertigbauwand (10) aufweisend Ausnehmung (10a) erstellt wird, indem eine Mehrzahl von Befestigungselementen (4) umfassend Aussengewinde (4a) an vorherbestimmten Einbauorten (20) derart verankert werden, dass die Aussengewinde (4a) über die Einbauorte (20) vorstehen, indem je ein Montageelement (3) durch Drehen um dessen Längsachse (L) auf die jeweiligen Aussengewinde (4a) aufgeschraubt werden und durch das Drehen zudem jedes Montageelement (3) auf eine vorherbestimmte Höhe eingestellt wird, indem die Fertigbauwand (10) abgesenkt wird bis die Montageelemente (3) zumindest teilweise in die entsprechende Ausnehmung (10a) zu liegen kommen, und indem jeweils ein Arretierelement (5) durch die Querbohrung (3g) des Montageelementes (3) und zumindest teilweise durch die Fertigbauwand (10) verlaufend eingeführt wird, sodass die Fertigbauwand (10) fest mit dem Einbauort (20) verbunden ist.

14. Verfahren nach Anspruch 13, **dadurch gekennzeichnet, dass** basierend auf einem Bohrplan die Löcher für die Befestigungselemente (4) automatisch am Einbauort (20) positioniert und gebohrt werden, und dass basierend auf einem Höhenplan die Höhe (H) der einzelnen Montageelemente (3) automatisch eingestellt wird.
